# EUROPÄISCHE PATENTSCHRIFT

(11) **EP 0 979 586 B1**
(45) Veröffentlichungstag und Bekanntmachung des Hinweises auf die Patenterteilung: **24.03.2004**
(21) Anmeldenummer: 98931978.5
(22) Anmeldetag: 22.04.1998
(51) Int. Cl.: H04Q 7/38, H04Q 7/22

(54) **VERFAHREN UND KOMMUNIKATIONSNETZ ZUR ADMINISTRIERUNG VON TEILNEHMERDATEN, INSBESONDERE DIENSTEDATEN**
METHOD AND COMMUNICATION NETWORK FOR ADMINISTERING SUBSCRIBER DATA, SPECIALLY SERVICE DATA
PROCEDE ET RESEAU DE COMMUNICATION POUR L'ADMINISTRATION DE DONNEES D'ABONNE, EN PARTICULIER DE DONNEES DE SERVICE

(30) Priorität: 30.04.1997 DE 19718445
(43) Veröffentlichungstag der Anmeldung: 16.02.2000
(73) Patentinhaber: SIEMENS AKTIENGESELLSCHAFT, 80333 München (DE)
(72) Erfinder: DZUBAN, Stanislav, A-1020 Wien (AT)
(86) Internationale Anmeldenummer: PCT/DE1998/001128
(87) Internationale Veröffentlichungsnummer: WO 1998/049840

(56) Entgegenhaltungen:
- DE-C- 4 417 779
- SMITH D G: "AN INTRODUCTION TO GSM ENHANCEMENTS FOR OPERATOR SPECIFIC SERVICES (CAMEL)" IEE COLLOQUIUM ON MOBILE COMMUNICATIONS TOWARDS THE NEXT MILLENIUM AND BEYOND, 17. Mai 1996, Seiten 6/1-6/09, XP000605991

## Beschreibung

Die Erfindung betrifft ein Verfahren zur Administrierung von Teilnehmerdaten für Teilnehmer eines Kommunikationsnetzes sowie ein entsprechendes Kommunikationsnetz.

Kommunikationsnetze sind beispielsweise als Festnetze oder Mobilkommunikationssysteme, wie das bekannte GSM-Mobilfunknetz (Global System for Mobile Communications), ausgebildet und weisen untereinander vernetzte Vermittlungseinrichtungen auf. In Mobilfunknetzen sind an die Vermittlungseinrichtungen jeweils Basisstationen angeschlossen, durch die über eine Luftschnittstelle Kommunikationsendgeräte anschließbar sind. Diese als Mobilstationen bezeichneten Kommunikationsendgeräte ermöglichen einem mobilen Teilnehmer des Kommunikationssystems den Netzzugang. Die Vermittlungseinrichtungen bewirken darüber hinaus den Übergang zu anderen Netzen, z.B. Datenübertragungsnetzen oder einem Festnetz.

Aus dem GSM-Mobilfunknetz ist es weiterhin bekannt, Speichereinheiten, in denen jeweils teilnehmerspezifische Daten zu den netzeigenen Diensten gespeichert sind, zu verwenden Eine dieser Speichereinheiten ist das Heimatregister, das als zentrale Datenbasis sich in der Regel an einem fest definierten Ort befindet und in dem die der Registrierung des Teilnehmers zugrundeliegenden Teilnehmerdaten, u.a. auch die Dienstedaten von jeweils für den Teilnehmer registrierten Dienstedaten, abgelegt sind. So wird die Speichereinheit netzseitig beispielsweise bei Anrufen für den Teilnehmer bezüglich seiner Teilnehmerdaten abgefragt, die zur weiteren Anrufbehandlung erforderlich sind. Durch eine Teilnehmerselbsteingabe in die Mobilstation kann der Teilnehmer die Daten in seiner eigenen Speichereinheit ansteuern, um z.B. die Anrufumlenkung zu einer Ansage (in seiner voice mail box) zu aktivieren/deaktivieren.

Darüber hinaus ist es allgemein bekannt, Dienste von Dienstesteuerungseinheiten (Service Control Points) eines die Netzstruktur eines Intelligenten Netzes unterstützenden Kommunikationsnetzes, z.B. eines Festnetzes, administrieren zu lassen. Dabei sind die Dienstesteuerungseinheiten jeweils als unabhängige Steuereinrichtungen ausgebildet und üblicherweise mit einer Vermittlungseinrichtung verbunden.

Aus der deutschen Patentschrift DE 44 17 779 C1 ist ein Mobilfunksystem bekannt, bei dem für den Fall eines Übertritts eines mobilen Teilnehmers von einem ersten Mobilfunkgebiet in ein zweites Mobilfunkgebiet der Teilnehmer von dem im neuen Gebiet angeordneten Heimatregister mit seinen eigenen Teilnehmerdaten bedient wird.

Es ist Aufgabe der Erfindung, für Teilnehmer eines Kommunikationsnetzes, die mit ihren Teilnehmerdaten jeweils in ihrer eigenen Speichereinheit eingetragen sind, auch den Zugriff auf die Teilnehmerdaten anderer Teilnehmer zu ermöglichen.

Diese Aufgabe wird gemäß der Erfindung durch die Merkmale des Patentanspruchs 1 hinsichlich des Verfahrens und durch die Merkmale des Patentanspruchs 18 hinsichtlich des Kommunikationsnetzes gelöst. Vorteilhafte Weiterbildungen der Erfindung sind den Unteransprüchen zu entnehmen.

Das Verfahren und das Kommunikationsnetz gemäß dem Gegenstand der Erfindung zur Administrierung der Teilnehmerdaten sieht vor, daß zwischen der für einen Teilnehmer zuständigen eigenen Speichereinheit und einer anderen Speichereinheit jeweils eine Schnittstelle eingerichtet wird, über die Informationen zur Ansteuerung von fremden Teilnehmerdaten übertragen.

Die zwischen der eigenen Speichereinheit und einer anderen Speichereinheit implementierte Schnittstelle ermöglicht auf einfache Art und Weise nicht nur eine Kommunikationsverbindung zur eigenen Speichereinheit, sondern von dort aus zu einer weiteren zentralen Datenbasis mit fremden Teilnehmerdaten. So können beispielsweise die Informationen - z.B. in einer Containernachricht auf Grund einer Teilnehmerselbsteingabe für einen bestimmten Dienst - an die fremde Speichereinheit weitergeleitet werden, um die Teilnehmerdaten des anderen Teilnehmers anzusteuern - z.B. die Dienstedaten dieses Dienstes für den anderen Teilnehmer in dessen Speichereinheit registrieren zu lassen. Ein solcher Dienst kann z.B. der "Follow-Me"-Dienst sein, bei dem die Anrufe zu der Rufnummer des anderen Teilnehmers zu dem Teilnehmer geroutet werden, der den Dienst in der fremden Speichereinheit über die eingerichtete neue Schnittstelle eintragen hat lassen - vorzugsweise über eine Zugangsberechtgung. Damit ist es möglich, z.B. über die Containernachricht(en) die Informationen bis zur fremden Speichereinheit durchzureichen. Eine Informationsübertragung - z.B. zur Abfrage, Erweiterung und/ oder Modifikation von Dienstedaten oder zur Synchronisation von Teilnehmerdaten in verschiedenen Speichereinheiten, die bisher keinen Dialog zum Datenaustausch führen konnten - ist für alle in zumindest zwei zentralen Datenbasen administrierbaren Teilnehmerdaten einheitlich möglich.

Der Gegenstand der Erfindung ist dabei sowohl für Speichereinheiten zur Administrierung von mobilen Teilnehmern eines Mobilfunknetzes als auch für Speichereinheiten zur Administrierung von Teilnehmern gemäß einer intelligenten Netzstruktur anwendbar. Im zuletzt genannten Fall kann ein Anbieter von Diensten eine Dienstesteuerungseinheit in ein Kommunikationsnetz stellen, ohne daß er von anderen Anbietern eine Änderung von deren Dienstelogik bzw. Dienstedaten verlangen müßte, um diesen Dienst nutzen zu können. Die direkte Synchronisation der Teilnehmerdaten in den verschiedenen Dienstesteuerungseinheiten ermöglicht dies. Die zuerst angesteuerte Dienstesteuerungseinheit initiiert den Dialog zu anderen Dienstesteuerungseinheiten über die jeweiligen Schnittstellen, um die Diensteabwicklung zur Nutzung des Dienstes in allen Dienstesteuerungseinheiten aufeinander abzustimmen. So könnte der oben als Beispiel zitierte "Follow-Me"-Dienst über eine IN-Plattform (Intelligent Network) oder CAMEL-Plattform (Customized Application for Mobil network Enhanced Logic) als betreiberspezifischer Dienst ohne Standardisierungsaufwand netzübergreifend funktionieren- egal, ob der Teilnehmer ein Mobilfunknetz-Teilnehmer oder ein Festnetz-Teilnehmer ist.

Entsprechend einer vorteilhaften Weiterbildung der Erfindung werden die Informationen zur Ansteuerung der fremden Teilnehmerdaten in zumindest einer Containernachricht zwischen jeweils zwei Speichereinheiten übertragen. Die Verwendung der Containernachricht stellt ein zukunftssicheres Übertragungsmedium dar, das unabhängig davon, ob die Informationen gemäß einem funktionalen Signalisierungsprotokoll oder als unstrukturierte USSD-Daten (Unstructured Supplementary Data) an der Speichereinheit eintreffen, die Informationen - unmodifiziert oder verändert oder ausgetauscht - diese in die Containernachricht einpackt und anschließend versendet.

Von Vorteil ist gemäß einer weiteren Weiterbildung der Erfindung, daß von der eigenen Speichereinheit eine Nachricht empfangen wird, an der sie erkennt, über welche Schnittstelle die Informationen zur anderen Speichereinheit zu übertragen sind. Weiterhin ist vorteilhaft, daß eine Zugangsberechtigung - z.B. in Form eines Passwortes - für den Zugriff einer Speichereinheit auf die fremden Teilnehmerdaten einer anderen Speichereinheit mitgesendet wird.

Gemäß einer anderen vorteilhaften Weiterbildung der Erfindung werden Informationen zur Synchronisation der Teilnehmerdaten von der eigenen Speichereinheit zur anderen Speichereinheit auf der Schnittstelle übertragen. Vorzugsweise werden die Dienstedaten eines mehrere Teilnehmer betreffenden Dienstes in mehreren Speichereinheiten administriert und durch die auf den jeweiligen Schnittstellen übertragenen Informationen aufeinander synchronisiert. Die automatische Synchronisation der Teilnehmerdaten, insbesondere der Dienstedaten, betrifft gemäß einer bevorzugten Ausgestaltung des erfindungsgemäßen Verfahrens einen Dienst (Mobile Access Hunting), bei dem ein im Kommunikationsnetz ankommender und an eine Gruppe von Teilnehmern gerichteter Anruf nur an die Teilnehmer weitergeleitet wird, die erreichbar sind, was durch Abfragen der Teilnehmerdaten in den Speichereinheiten über die jeweiligen Schnittstellen ermittelt wird. Der Vorteil besteht darin, daß es nicht mehr notwendig ist, alle Mitglieder der Gruppe in einem einzigen Heimatregister verwalten zu müssen.

Gemäß einer besonders vorteilhaften Anwendung der Erfindung wird vom Teilnehmer durch die Teilnehmerselbsteingabe ein Dienst angesteuert und zu seiner eigenen Speichereinheit übertragen, der signalisiert, daß die einen anderen Teilnehmer betreffenden Kommunikationsverbindungen zu ihm weitergeleitet werden sollen. Von der eigenen Speichereinheit wird in einem nächsten Schritt festgestellt, daß der andere Teilnehmer in einer fremden Speichereinheit registriert ist Daraufhin wird der Dienst über die Schnittstelle in der fremden Speichereinheit für den anderen Teilnehmer registriert.

Bevorzugt wird von dem Kommunikationsendgerät der Dienst zusammen mit einer Identifikationsinformation zur Kennzeichnung der für den anderen Teilnehmer zuständigen Speichereinheit zum Kommunikationsnetz ausgesendet. Im Kommunikationsnetz wird dann der Dienst zusammen mit der Identifikationsinformation zur Kennzeichnung der für den anderen Teilnehmer zuständigen Speichereinheit und mit einer Identifikationsinformation zur Kennzeichnung der für den die Teilnehmerselbsteingabe bewirkenden Teilnehmer zuständigen Speichereinheit übertragen. Die letztgenannte Identifikationsinformation wird von einer Netzeinrichtung - vorzugsweise von der den Dienst zuerst empfangenden, d.h. der eigenen Speichereinheit - hinzugefügt. Vorteilhafterweise wird als Identifikationsnummer die Mobilteilnehmerrufnummer des jeweiligen Teilnehmers verwendet.

Gemäß einer Weiterbildung der Erfindung wird von einer Vermittlungseinrichtung, bei der ein für den anderen Teilnehmer bestimmter Anruf ankommt, eine Verbindungsaufbauanforderungsnachricht an die zuständige Speichereinheit gesendet und als Antwort eine Information über den registrierten Dienst zusammen mit einer Identifikationsinformation zur Kennzeichnung des Teilnehmers, zu dem der Anruf weiterzuleiten ist, empfangen wird. Damit kann der in der fremden Speichereinheit für den anderen Teilnehmer registrierte Dienst beim Verbindungsaufbau abgerufen und initiiert werden. Daran anschließend wird auf Grund der eintreffenden Informationen vorzugsweise eine Verbindungsaufbaunachricht zu einer für den gekennzeichneten Teilnehmer zuständigen Vermittlungseinrichtung gesendet, um das Routen zu dem Teilnehmer, der die fremde Datenbäsis manipuliert hat, zu erreichen.

Anhand von zeichnerischen Darstellungen wird der Erfindungsgegenstand im folgenden näher erläutert

Dabei zeigen
- FIG 1: das Blockschaltbild eines Mobilfunknetzes, in dem das erfindungsgemäße Verfahren zur Administrierung der Teilnehmerdaten für mobile Teilnehmer abläuft,
- FIG 2: eine beispielhafte Zusammensetzung von Nachrichten für das Registrieren eines bestimmten Dienstes für einen Teilnehmer in einem fremden Heimatregister,
- FIG 3: eine schematische Darstellung der beim Registrieren des Dienstes beteiligten Einrichtungen eines Mobilfunknetzes mit dem zur Administrierung der Teilnehmerdaten erforderlichen Nachrichtenfluß,
- FIG 4: eine schematische Darstellung des Verbindungsaufbaus bei einem im Mobilfunknetz ankommenden Anruf und Registrierung des Dienstes im Heimatregister, und
- FIG 5: eine schematische Darstellung der beim Registrieren des Dienstes beteiligten Einrichtungen eines die intelligente Netzstruktur unterstützenden Kommunikationsnetzes mit dem zur Administrierung der Teilnehmerdaten erforderlichen Nachrichtenfluß.

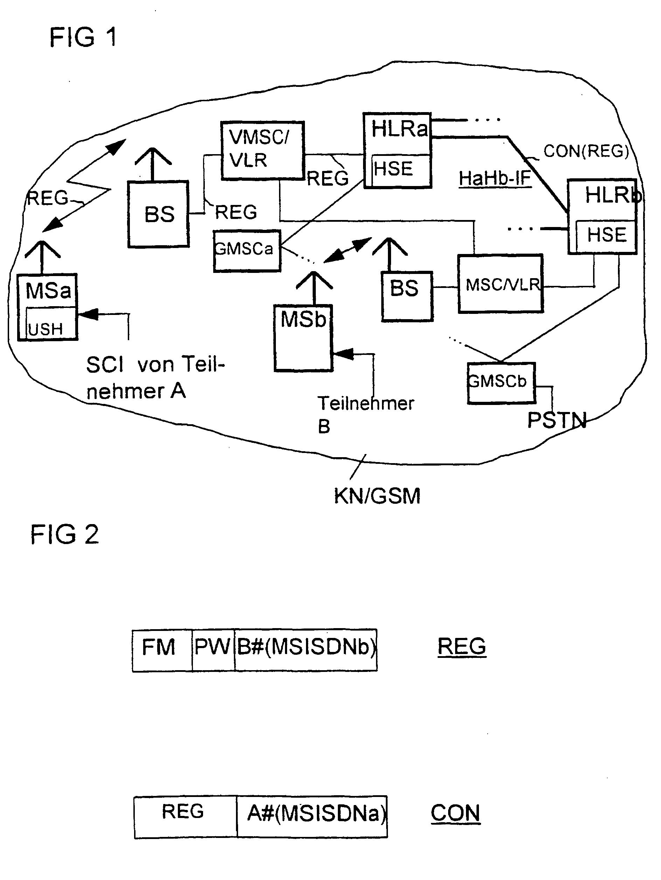

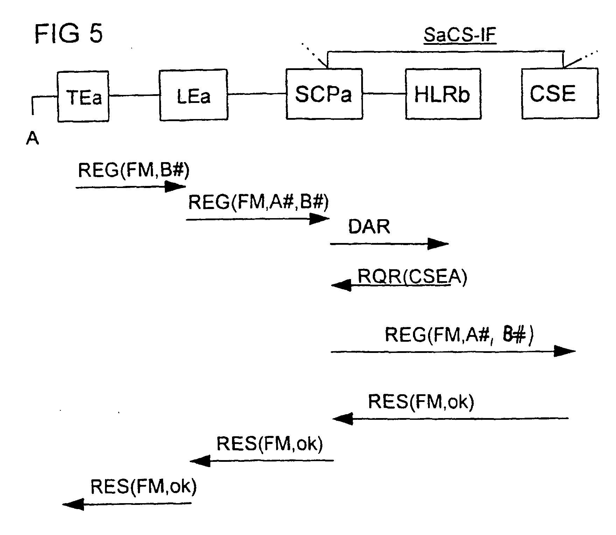

Das erfindungsgemäße Verfahren und Kommunikationsnetz wird am Beispiel eines in FIG 1 dargestellten Mobilfunknetzes GSM nach dem gleichnamigen Standard beschrieben. Ein Festnetz, das die IN-Netzstruktur (Intelligent Network) mit Dienstesteuerungsstellen unterstützt und in dem der Gegenstand der Erfindung ebenfalls ablaufen kann, ist nicht als Blockschaltbild dargestellt, aber FIG 5 zeigt die wesentlichen Netzeinrichtungen und ihr Zusammenwirken.

Das Kommunikationsnetz KN in FIG 1 weist mehrere Vermittlungseinrichtungen auf - beispielhaft sind die Vermittlungseinrichtungen VMSC/VLR, MSC/VLR, GMSCa, GMSCb gezeigt - die miteinander verbunden sind. Die Vermittlungseinrichtung VMSC/VLR stellt eine Kommunikationsverbindung zu einem mobilen Teilnehmer A über eine Basisstation BS, die mit der Vermittlungseinrichtung drahtgebunden verbunden ist, und über eine Luftschnittstelle zwischen Basisstation BS und einer Mobilstation MSa her. Die Mobilstation MS ist das Kommunikationsendgerät des mobilen Teilnehmers A. Eine weitere Vermittlungseinrichtung MSC/VLR stellt eine Kommunikationsverbindung zu einem anderen mobilen Teilnehmer B über eine weitere Basisstation BS, die mit der Vermittlungseinrichtung drahtgebunden verbunden ist, und über eine Luftschnittstelle zwischen Basisstation BS und einer Mobilstation MSb her. Die Mobilstation MSb ist das Kommunikationsendgerät des mobilen Teilnehmers B. Die Vermittlungseinrichtungen GMSCa und GMSCb bilden jeweils einen Netzübergang in ein weiteres Netz, z.B. ein öffentliches Fernsprechnetz PSTN.

Nach FIG 1 ist eine Speichereinheit HLRa als Heimatregister des mobilen Teilnehmers A im Mobilfunknetz GSM angeordnet. Sie ist eine eigenständige zentrale Datenbasis, die im vorliegenden Beispiel mit der dargestellten Vermittlungseinrichtung VMSC/VLR und der Vermittlungseinrichtung GMSCa verbunden ist. Eine andere Speichereinheit HLRb ist als Heimatregister des mobilen Teilnehmers B im Mobilfunknetz GSM angeordnet. Sie ist ebenfalls eine eigenständige zentrale Datenbasis, die im vorliegenden Beispiel mit der dargestellten Vermittlungseinrichtung MSC/VLR und der Vermittlungseinrichtung GMSCb verbunden ist. Weitere Heimatregister können je nach Größe des abzudeckenden Funkversorgungsbereichs vorhanden sein und verhalten sich im Hinblick auf das erfindungsgemäße Verfahren analog zu den dargestellten Speichereinheiten. Den Vermittlungseinrichtungen VMSC/VLR und MSC/VLR der momentanen Anschlüsse mobiler Teilnehmers A, B ist jeweils ein Besucherregister VLR als vorübergehende Speichereinheit zugeordnet, solange sich der mobile Teilnehmer A, B mit seiner Mobilstation Msa, MSb in deren Zuständigkeitsbereich befindet. Die Speichereinheiten HLRa, HLRb und VLR enthalten jeweils Teilnehmerdaten, die u.a. auch Dienstedaten der jeweils für den Teilnehmer registrierten Dienste umfassen.

Zusätzlich zu der Möglichkeit, mit einem Besucherregister VLR zum Austausch von Daten verbunden zu sein, ist erfindungsgemäß jeweils der Anschluß des Heimatregisters, z.B. HLRa, an ein anderes Heimatregister, z.B. HLRb, über eine Schnittstelle, z.B. HaHb-IF, möglich, um einen direkten Zugriff zu fremden Teilnehmerdaten zu haben, die nicht im eigenen Heimatregister verwaltet werden. Dabei bleibt der Teilnehmerdatensatz für den Teilnehmer A im eigenen Heimatregister HLRa unberührt, während der Teilnehmerdatensatz für den Teilnehmer B in dem - aus der Sicht des Teilnehmers A - fremden Heimatregister HLRb verändert wird. Grundsätzlich können derartige Schnittstellen zwischen allen Heimatregistern eingerichtet werden, über die auf fremde Teilnehmerdaten, u.a. Dienstedaten, in anderen zentralen Speichereinheiten Zugriff besteht. vorzugsweise wird als Protokoll das im Mobilfunknetz GSM zur Kommunikation der Speichereinheiten, z.B. HLRa, VLR, bereits verwendete mobilfunkspezifischen Signalisierungsprotokoll (MAP, Mobile Application Part) benutzt und für die Übertragungsstrecken auf den Schnittstellen, z.B. HaHb-IF, erweitert.

Der mobile Teilnehmer A initiiert durch eine MMI-Operation (Man-Machine-Interface) an der Mobilstation MSa bekanntlich eine Teilnehmerselbsteingabe SCI (Service Controlled Input), um einen Dienst, der von der Speichereinheit HLRa steuerbar ist, zu administrieren. Die Mobilstation MSa erhält daraus die Information, daß eine Dienstesteuerung oder -behandlung für einen bestimmten Dienst vom Teilnehmer A gewünscht ist, und entsprechende Funktionen netzseitig auszuführen sind. Der Zugriff auf fremde Teilnehmerdaten bezieht sich im vorliegenden Beispiel auf einen nicht-GSM standardisierten Dienst, den "Follow-Me"-Dienst, den der Teilnehmer A in dem Heimatregister HLRb des Teilnehmers B registrieren möchte. Durch die Ansteuerung soll eine Veränderung der Teilnehmerdaten derart bewirkt werden, daß alle den Teilnehmer B betreffenden Kommunikationsverbindungen automatisch zu dem Teilnehmer A weitergeleitet, d.h. geroutet werden. Die Teilnehmerselbsteingabe SCI erfolgt z.B. anhand einer USSD-Operation (Unstructured Supplementary Services Data), die von einer USSD-Steuereinheit USH in der Mobilstation MSa erkannt wird. Auf Grund der Teilnehmerselbsteingabe SCI beginnt zunächst ein Dialog mit dem für den Teilnehmer A zuständigen Heimatregister, d.h. dem eigenen Heimatregister HLRa.

Eine Nachricht REG mit Informationen zur Ansteuerung der Teilnehmerdaten wird von der Mobilstation MSa erzeugt und über die Basisstation BS zur Vermittlungseinrichtung VMSC/VLR und von dort zu dem Heimatregister HLRa übertragen. Die Informationen werden dabei entweder gemäß einer USSD-Formatstruktur oder gemäß einem funktionalen Protokoll mit funktioneller Definition der auszuführenden Funktion, z.B. "Registriere den obigen Dienst", übertragen. Unabhängig von der Übertragungsart enthält die Nachricht REG gemäß FIG 2 eine Information FM (Follow Me) zur Kennzeichnung des speziellen Dienstes. Sie kann beispielsweise aus einem Dienstecode,an der das Heimatregister HLRa den Dienst erkennt, bestehen. Die Nachricht signalisiert auch, daß der spezielle Dienst mit entsprechenden Dienstedaten für einen anderen Teilnehmer zu registrieren sind. Der andere Teilnehmer B ist für das Heimatregister HLRa an einer in der Nachricht REG gemäß FIG 2 mitgesendeten Identifikationsinformation B# erkennbar, die auch auf das für den Teilnehmer B zuständige Heimatregister HLRb schließen läßt. Vorzugsweise besteht die Identifikationsinformation B# aus der Teilnehmerrufnummer MSISDNb des mobilen Teilnehmers B. Durch Auswertung der Nachricht REG in einer Steuereinrichtung HSE erkennt das Heimatregister HLRa, daß es sich um die Registrierung des Dienstes "Follow-Me" handelt und daß die Teilnehmerdaten des Teilnehmers B nicht im Heimatregister HLRa administriert werden. Darüber hinaus kann sie der Nachricht REG, d.h. an der Identifikationsinformation B#, entnehmen, daß das Heimatregister HLRb für den Teilnehmer B zuständig ist und damit die Schnittstelle HaHb-IF zur Informationsübertragung herangezogen wird. Die Nachricht REG enthält darüber hinaus ein Passwort PW, das empfangsseitig für die Zugangsberechtigung zu dem anderen Heimatregister HLRb benutzt und ausgewertet wird - z.B. durch Vergleich mit einem Soll-Passwort.

Daraufhin verpackt das Heimatregister HLRa die empfangene Nachricht REG entweder unverändert oder modifiziert in eine Containernachricht CON und sendet sie zusammen mit einer Identifikationsinformation A# zur Kennzeichnung des Teilnehmers A über die Schnittstelle HaHb-IF zum Heimatregister HLRb. Die Identifikationsinformation A# besteht ebenfalls vorzugsweise aus der Teilnehmerrufnummer MSISDNa des Teilnehmers A. Die Identifikationsinformation A# kann auch bereits von der Vermittlungseinrichtung VMSC/VLR in die Nachricht REG eingefügt werden. Den prinzipiellen Aufbau der Containernachricht CON bei Weiterleiten der nicht veränderten Nachricht REG zeigt FIG 2. Für den Fall, daß eine Veränderung der eintreffenden Nachricht REG oder ein Ersetzen durch eine andere Nachricht erfolgt, wird die modifizierte oder neue Nachricht in der Containernachricht CON gesendet. Die Containernachricht CON weist beispielsweise ein Kopffeld, das die Nachricht als Containernachricht kennzeichnet, ein Datenfeld mit den Informationen sowie ein Längenfeld, das die Nachrichtenlänge angibt, auf. Von einer Steuereinrichtung im Heimatregister HLRb werden die in der empfangenen Containernachricht CON enthaltenen Informationen analysiert und der Dienst "Follow-Me" zum Routen aller an den Teilnehmer B mit der Teilnehmerrufnummer MSISDNb gemäß FIG 2 gerichteten Verbindungen in einer Speichereinrichtung HSS des Heimatregisters HLRb registriert. Der für den Teilnehmer B reservierte Speichereintrag umfaßt Dienstedaten, die z.B. die eingetroffenen Informationen FM zur Festlegung der Art des Dienstes und die empfangene Teilnehmerrufnummer MSISDNa des Teilnehmers A gemäß FIG 2 umfassen.

In Ergänzung zu dem obigen Beispiel einer Diensteregistrierung können auf den eingerichteten Schnittstellen zwischen jeweils zwei Heimatregistern auch Informationen zur Synchronisation der Teilnehmerdaten der eigenen Speichereinheit, z.B. HLRa, mit den Teilnehmerdaten anderer Speichereinheiten, z.B. HLRb, übertragen werden. Von besonderem Vorteil ist es, wenn die Dienstedaten eines mehrere Teilnehmer betreffenden Dienstes in mehreren Speichereinheiten administriert und durch die auf den jeweiligen Schnittstellen übertragenen Informationen aufeinander synchronisiert werden. Die automatische Synchronisation der Teilnehmerdatensätze, insbesondere der Dienstedaten, in mehreren Speichereinheiten ist beispielsweise auf den Dienst "Mobile Access Hunting" anwendbar. Bei diesem Dienst wird ein im Mobilfunknetz GSM ankommender und an eine Gruppe von Teilnehmern gerichteter Anruf nur an die Teilnehmer weitergeleitet, die erreichbar sind, was durch Abfragen der Teilnehmerdaten in den jeweils betroffenen Speichereinheiten über die jeweiligen Schnittstellen ermittelbar ist. Der Vorteil besteht darin, daß es nicht mehr notwendig ist, alle Mitglieder der Gruppe in einem einzigen Heimatregister verwalten zu müssen. Beim Zugriff zu fremden Teilnehmerdaten - egal, ob zum Registrieren eines speziellen Dienstes oder zur Datensynchronisation - ist es von Vorteil, eine Zugangsberechtigung des Teilnehmers oder der Netzeinrichtung, die die Ansteuerung durchführt, in den jeweiligen Nachrichten mitzusenden. Eine solche Zugangsberechtigung kann z.B. aus dem Passwort PW gemäß FIG 2 (in der Nachricht REG) bestehen, das beim Empfänger der Nachricht einfach auswertbar ist.

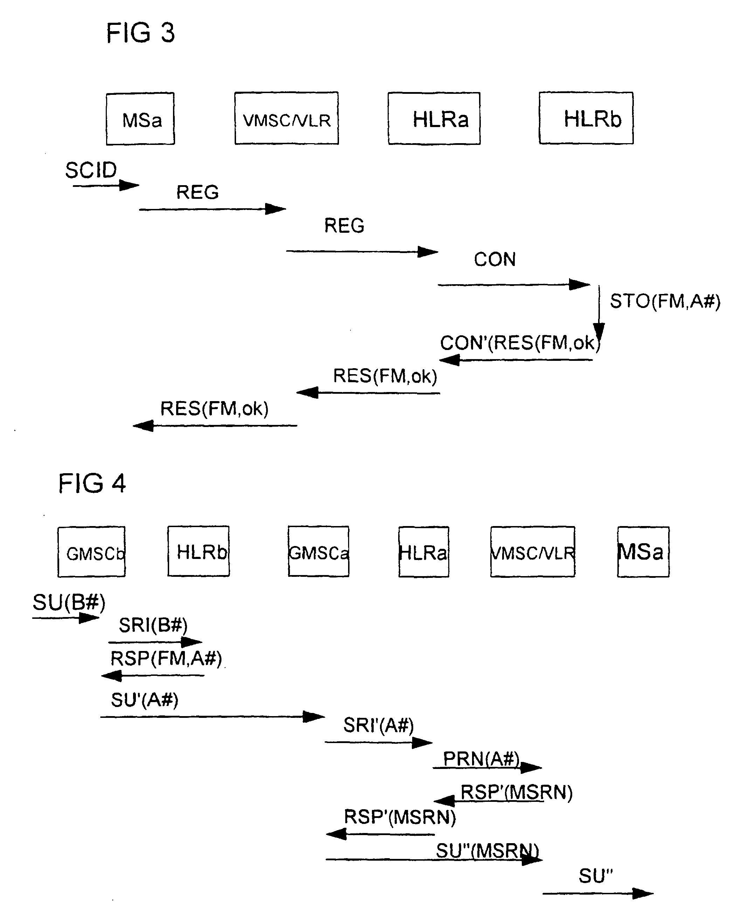

FIG 3 zeigt eine schematische Darstellung der beim Registrieren des zu FIG 1 beschriebenen Dienstes beteiligten Einrichtungen des Mobilfunknetzes mit dem zur Administrierung der Teilnehmerdaten erforderlichen Nachrichtenfluß. Die Netzeinrichtungen sind die Vermittlungseinrichtung VMSC/VLR und die als Heimatregister HLRa, HLRb ausgebildeten Speichereinheiten, ergänzt durch das Kommunikationsendgerät in Form der Mobilstation MSa. Die Mobilstation MSa empfängt Teilnehmerselbsteingabedaten SCID, aus der sie die Nachricht REG generiert und aussendet. Die zuständige Vermittlungseinrichtung VMSC/VLR leitet die empfangene Nachricht REG zum Heimatregister HLRa weiter. Das Heimatregister HLRa erzeugt die Containernachricht CON und sendet sie über die zum Heimatregister HLRb existierende Schnittstelle. Eine Nachricht STO soll im Nachrichtenfluß signalisieren, daß intern das Speichern der Informationen FM und A# zu erfolgen hat. Sie bilden Dienstedaten, mit denen der beschriebene Dienst für den ausgewählten Teilnehmer in dessen Heimatregister HLRb implementiert ist. Auf diese Weise ist der von einem Teilnehmer (A) initiierte Registrierungsvorgang für einen Dienst durch direktes Zugreifen auf ein - üblicherweise für ihn nicht zugängliches - Heimatregister und damit auf fremde Teilnehmerdaten ausgeführt. Zur Bestätigung der Aktion erzeugt das Heimatregister HLRb eine Antwortnachricht RES, die eine Information ok zur Kennzeichnung einer erfolgreichen Registrierung und die Information FM über den registrierten Dienst enthält. Die Antwortnachricht RES wird wiederum in eine Containernachricht CON' gepackt und auf der Schnittstelle zum Heimatregister HLRa übertragen. Von dort gelangt die Antwortnachricht RES über die Vermittlungseinrichtung zur Mobilstation MSa. Eine Anzeige der erfolgreich ausgeführten Registrierungsaktion für den Teilnehmer (A) ist möglich.

FIG 4 zeigt eine schematische Darstellung des Verbindungsaufbaus bei einem im Mobilfunknetz ankommenden Anruf für den Fall, daß die Registrierung des Dienstes im Heimatregister HLRb für den Teilnehmer (B) gemäß der Vorgehensweise nach FIG 3 bereits erfolgt ist. Dabei sei angenommen, daß der Anruf beispielsweise von einem anrufenden Teilnehmer im öffentlichen Fernsprechnetz initiiert wurde und daher eine Verbindungsaufbaunachricht SU (setup) mit der angerufenen Teilnehmerrufnummer B# des B-Teilnehmers von der Vermittlungseinrichtung GMSCb empfangen wird. Die Vermittlungseinrichtung GMSCb richtet standardgemäß eine Verbindungsaufbauanforderungsnachricht SRI (send routing info) mit der Teilnehmerrufnummer B# an das geeignete Heimatregister HLRb. Sie erhält als Antwort die Nachricht RSP mit den Informationen FM, A#, die dem Speichereintrag des B-Teilnehmers für den registrierten Dienst "Follow-Me" entnommen sind. Auf Grund der Teilnehmerrufnummer A# und dem Hinweis auf obigen speziellen Dienst sendet die Vermittlungseinrichtung GMSCb eine Verbindungsaufbaunachricht SU' (setup) mit der Teilnehmerrufnummer A# des A-Teilnehmers zu der Vermittlungseinrichtung GMSCa. Die Vermittlungseinrichtung GMSCa startet eine Verbindungsaufbauanforderungsnachricht SRI' (send routing info) mit der Teilnehmerrufnummer A# an das zuständige Heimatregister HLRa. Das Heimatregister HLRa holt sich eine Aufenthaltsrufnummer MSRN (mobile subscriber roaming number) durch standardmäßiges Aussenden einer Nachricht PRN (provide roaming number), die die Teilnehmerrufnummer A# enthält, zu der momentan für den A-Teilnehmer zuständigen Vermittlungseinrichtung VMSC/VLR. Die Aufenthaltsrufnummer MSRN wird dabei in einer Antwortnachricht RSP' auf die Anfrage hin übertragen. Bei Kenntnis der Aufenthaltsrufnummer MSRN initiiert die Vermittlungseinrichtung GMSCa den Verbindungsaufbau zum A-Teilnehmer, indem eine Verbindungsaufbaunachricht SU" (setup) erzeugt und zur Vermittlungseinrichtung VMSC/VLR und von dort zur Mobilstation MSa gesendet wird.

FIG 5 zeigt eine schematische Darstellung der beim Registrieren des Dienstes beteiligten Einrichtungen eines die intelligente Netzstruktur unterstützenden Kommunikationsnetzes mit dem zur Administrierung der Teilnehmerdaten erforderlichen Nachrichtenfluß. Die Netzeinrichtungen sind eine für einen leitungsgebundenen A-Teilnehmer zuständige Vermittlungseinrichtung LEa (Local Exchange), an die das Kommunikationsendgerät TEa (Terminal Equipment) des A-Teilnehmers angeschlossen ist, eine mit der Vermittlungseinrichtung LEa verbundene Dienstesteuerungseinheit SCPa (Service Control Point), eine weitere Dienstesteuerungseinheit CSE (CAMEL Service Environment) sowie eine Speichereinheit HLRb, die für einen mobilen B-Teilnehmer die Teilnehmerdaten speichert. Die Dienstesteuerungseinheiten SCPa, CSE enthalten jeweils eine Steuerungsfunktion (SCF, Service Control Function) für die Diensteabwicklung und eine Datenfunktion (SDF, Service Data Function) für die zur Dienstebehandlung notwendigen Daten. Im vorliegenden Beispiel handelt es sich bei der Dienstesteuerungseinheit SCPa um eine Einheit, die an eine Einrichtung eines Festnetzes gekoppelt ist, während die Dienstesteuerungseinheit CSE die CAMEL-Plattform in einem Mobilfunknetz unterstützt. Um eine gegenseitige Kommunikation für die Administrierung auch von fremden Teilnehmerdaten, z.B. zur Datensynchronisation oder für einen Zugriff zu Dienstedaten eines bestimmten Dienstes, zu ermöglichen, ist jeweils eine Schnittstelle zwischen zwei Dienstesteuerungseinheiten eingerichtet. Im vorliegenden Beispiel besteht eine Schnittstelle SaCS-IF zwischen der Dienstesteuerungseinheit SCPa und der Dienstesteuerungseinheit CSE. Durch die Möglichkeit der direkten Kommunikation kann die Dienstesteuerung für einen Teilnehmer - abweichend von der bisherigen Lösung durch eine einzige Dienstesteuerungseinheit - auch auf mehrere Dienstesteuerungseinheiten verteilt werden. Damit genügt jedem Diensteanbieter eine Dienstesteuerungseinheit SCPa oder CSE, an der er seine Dienste zur Verfügung stellt, ohne daß er sich bei Planung, Einführung und/oder der Nutzung mit anderen Diensteanbietern an derselben Dienstesteuerungseinheit absprechen müßte. Ist für das Administrieren von Teilnehmerdaten eines Teilnehmers ein Zugriff auf mehrere Dienstesteuerungseinheiten notwendig, werden die Adressen der betroffenen übrigen Dienstesteuerungseinheiten in einer ausgewählten Speichereinheit gespeichert. Für das vorliegende Beispiel besteht für die Dienstesteuerungseinheit SCPa die Möglichkeit, die Adresse der anderen Dienstesteuerungseinheit CSE vom Heimatregister HLRb des B-Teilnehmers abzurufen.

Das in FIG 5 dargestellte Beispiel betrifft das Registrieren des zuvor beschriebenen Dienstes "Follow-Me". Der Festnetzteilnehmer A will diesen Dienst für den mobilen B-Teilnehmer eintragen lassen. Er führt eine Eingabeoperation in das Kommunikationsendgerät TEa aus, die daraufhin die Nachricht REG (register) mit den Informationen FM zur Kennzeichnung des Dienstes und der Teilnehmerrufnummer B# des B-Teilnehmers initiiert und zur Vermittlungseinrichtung LEa sendet. Die Vermittlungseinrichtung LEa ergänzt in der Nachricht REG die Teilnehmerrufnummer A# des A-Teilnehmers und leitet dann die modifizierte Nachricht an die Dienstesteuerungseinheit SCPa weiter. Um zu der für den mobilen B-Teilnehmer zuständigen die Dienstesteuerungseinheit CSE zu gelangen, fordert die Dienstesteuerungseinheit SCPa von dem Heimatregister HLRb die Adresse der Dienstesteuerungseinheit CSE an. Dazu sendet sie eine Adressenanforderungsnachricht DAR (data request) zum Heimatregister HLRb und empfängt eine Antwortnachricht RQR (request response) die Adresseninformation CSEA.

Anhand der empfangenen Adresseninformation CSEA kann die Dienstesteuerungseinheit SCPa die Nachricht REG mit den Informationen FM, A#, B# zur richtigen Dienstesteuerungseinheit CSE senden. Die Dienstesteuerungseinheit CSE registriert für den gekennzeichneten B-Teilnehmer den speziellen Dienst durch Ansteuerung des Speichereintrags in der Datenfunktion (SDF). Auf diese Weise ist der von dem Festneilnehmer (A) initiierte Registrierungsvorgang für einen Dienst durch direktes Zugreifen auf die - üblicherweise für ihn nicht zugängliches - Dienstesteuerungseinheit CSE und damit auf fremde Teilnehmerdaten des mobilen Teilnehmer (B) ausgeführt. Zur Bestätigung der Aktion erzeugt die Dienstesteuerungseinheit CSE die Antwortnachricht RES, die eine Information ok zur Kennzeichnung einer erfolgreichen Registrierung und die Information FM über den registrierten Dienst enthält. Die Antwortnachricht RES wird über die Schnittstelle SaCS-IF zur Dienstesteuerungseinheit SCPa gesendet. Von dort gelangt die Antwortnachricht RES zur Vermittlungseinrichtung LEa und zum Kommunikationsendgerät TEa. Die erfolgreich ausgeführte Registrierungsaktion für den Festnetzteilnehmer (A) wird am Kommunikationsendgerät TEa angezeigt.

Durch die obige Vorgehensweise ist eine hierarchische Dienstesteuerung gemäß einer intelligenten Netzstruktur möglich, d.h. die zuerst angesteuerte Dienstesteuerungseinheit baut einen Dialog zu einem oder mehreren anderen Dienstesteuerungseinheiten auf, um die Synchronisation der Teilnehmerdaten durchzuführen oder einen Dienst durch z.B. Zugriff auf neue Teilnehmerdaten in den anderen zentralen Datenbasen abzuwickeln. Für die Synchronisation der Teilnehmerdaten oder die gemeinsame Benutzung bestimmter Dienstedaten gemäß dem Verfahren der Erfindung brauchen keine Standards definiert zu werden. Der am Ausführungsbeispiel beschriebene Dienst kann über die IN-Plattform (Festnetz) bzw. CAMEL-Plattform (Mobilfunknetz) als betreiberspezifischer Dienst ohne Standardisierungsaufwand implementiert werden. Zusätzlich funktioniert der Dienst auch netzübergreifend unabhängig davon, ob einer der Teilnehmer ein Festnetzteilnehmer oder ein mobiler Teilnehmer ist.

## Patentansprüche

1. Verfahren zur Administrierung von Teilnehmerdaten für Teilnehmer (A, B) eines Kommunikationsnetzes (KN),
- mit vernetzten Vermittlungseinrichtungen (VMSC/VLR, GMSCa, GMSCb), an die über weitere Einrichtungen (BS) den Zugang von Teilnehmern ermöglichende Kommunikationsendgeräte (MSa, MSb) anschließbar sind und/oder über die Übergänge zu mindestens einem weiteren Netz (PSTN) bewirkt werden können,
- mit einer Speichereinheit (HLRa), die als zentrale Datenbasis die Teilnehmerdaten von Teilnehmern registriert und zur Unterstützung von Kommunikationsverbindungen zu einem dieser Teilnehmer (A) die Teilnehmerdaten des Teilnehmers bereitstellt, und
- zumindest einer weiteren Speichereinheit (HLRb), die als zentrale Datenbasis die Teilnehmerdaten von weiteren Teilnehmern registriert und zur Unterstützung von Kommunikationsverbindungen zu einem dieser Teilnehmer (B) die Teilnehmerdaten des Teilnehmers bereitstellt,
**dadurch gekennzeichnet,**
- **dass** vom Teilnehmer (A) über eine Teilnehmerselbsteingabe (SCI) an dem Kommunikationsendgerät (MSa) die eigene Speichereinheit (HLRa) zur Administrierung der Teilnehmerdaten angesteuert wird,
- **dass** zwischen der eigenen Speichereinheit (HLRa) und einer anderen Speichereinheit (HLRb) jeweils eine Schnittstelle (HaHb-IF) eingerichtet wird, über die Informationen (FM, B#) zur Ansteuerung von fremden Teilnehmerdaten übertragen werden.

2. Verfahren nach Anspruch 1, bei dem
die Informationen (FM, B#) zur Ansteuerung der fremden Teilnehmerdaten in zumindest einer Containernachricht (CON) zwischen jeweils zwei Speichereinheiten (HLRa, HLRb) übertragen werden.

3. Verfahren nach Anspruch 1 oder 2, bei dem
von der eigenen Speichereinheit (HLRa) eine Nachricht (REG) empfangen wird, an der sie erkennt, über welche Schnittstelle (HaHb-IF) die Informationen (FM, B#) zur anderen Speichereinheit (HLRb) zu übertragen sind.

4. Verfahren nach Anspruch 3, bei dem
die empfangene Nachricht (REG) unverändert in einer Containernachricht (CON) weitergeleitet wird.

5. Verfahren nach Anspruch 3, bei dem
die empfangene Nachricht (REG) von der eigenen Speichereinheit (HLRa) verändert oder ersetzt wird und eine modifizierte oder neue Nachricht in einer Containernachricht (CON) übertragen wird.

6. Verfahren nach einem der vorhergehenden Ansprüche, bei dem Informationen zur Synchronisation der Teilnehmerdaten von der eigenen Speichereinheit (HLRa) zur anderen Speichereinheit (HLRb) auf der Schnittstelle (HaHb-IF) übertragen werden.

7. Verfahren nach Anspruch 6, bei dem
die Dienstedaten eines mehrere Teilnehmer betreffenden Dienstes in mehreren Speichereinheiten (HLRa, HLRb) administriert und durch die auf den jeweiligen Schnittstellen (HaHb-IF) übertragenen Informationen aufeinander synchronisiert werden.

8. Verfahren nach einem der vorhergehenden Ansprüche, bei dem eine Zugangsberechtigung (PW) für den Zugriff einer Speichereinheit (HLRa) auf die fremden Teilnehmerdaten einer anderen Speichereinheit (HLRb) mitgesendet wird.

9. Verfahren nach einem der vorhergenden Ansprüche zur Anwendung für einen anrufbezogenen Dienst, bei dem ein im Kommunikationsnetz (KN) ankommender und an eine Gruppe von Teilnehmern gerichteter Anruf nur an die Teilnehmer weitergeleitet wird, die erreichbar sind, was durch Abfragen der Teilnehmerdaten in den Speichereinheiten (HLRa, HLRb) über die jeweiligen Schnittstellen (HaHb-IF) ermittelt wird.

10. Verfahren nach einem der vorhergehenden Ansprüche, bei dem
- vom Teilnehmer (z.B. A) durch die Teilnehmerselbsteingabe (SCI) ein Dienst angesteuert und eine Information (FM) darüber zu seiner eigenen Speichereinheit (HLRa) gesendet wird, die signalisiert, daß die einen anderen Teilnehmer betreffenden Kommunikationsverbindungen zu ihm weitergeleitet werden sollen,
- von der eigenen Speichereinheit (HLRa) festgestellt wird, daß der andere Teilnehmer in einer anderen Speichereinheit (HLRb) registriert ist, und die den Dienst kennzeichnende Information (FM) über die Schnittstelle (HaHb-IF) übertragen sowie in der anderen Speichereinheit (HLRb) für den anderen Teilnehmer registriert wird.

11. Verfahren nach Anspruch 10, bei dem
von dem Kommunikationsendgerät (MSa) die Information (FM) über den Dienst zusammen mit einer Identifikationsinformation (B#) zur Kennzeichnung der für den anderen Teilnehmer zuständigen Speichereinheit (HLRb) zum Kommunikationsnetz (KN) ausgesendet wird.

12. Verfahren nach Anspruch 10 oder 11, bei dem
die den Dienst kennzeichnende Information (FM) im Kommunikationsnetz (KN) zusammen mit einer Identifikationsinformation (B#) zur Kennzeichnung der für den anderen Teilnehmer zuständigen Speichereinheit (z.B. HLRb) und mit einer Identifikationsinformation (A#) zur Kennzeichnung der für den die Teilnehmerselbsteingabe (SCI) bewirkenden Teilnehmer (A) zuständigen Speichereinheit (HLRa) übertragen wird.

13. Verfahren nach Anspruch 11 oder 12, bei dem
als Identifikationsinformation (B#, A#) die Teilnehmerrufnummer (MSISDNb, MSISDNa) des jeweiligen Teilnehmers gesendet wird.

14. Verfahren nach einem der Ansprüche 10 bis 13, bei dem
von einer Vermittlungseinrichtung (GMSCb), bei der ein für den anderen Teilnehmer bestimmter Anruf ankommt, eine Verbindungsaufbauanforderungsnachricht (SRI) an die zuständige Speichereinheit (HLRb) gesendet und als Antwortnachricht (RSP) die Information (FM) über den registrierten Dienst zusammen mit einer Identifikationsinformation (A#) zur Kennzeichnung des Teilnehmers (A), zu dem der Anruf weiterzuleiten ist, empfangen wird.

15. Verfahren nach einem der vorhergehenden Ansprüche, bei dem die eigene Speichereinheit und die andere Speichereinheit jeweils von einem Heimatregister (HLRa, HLRb) zur Administrierung der Teilnehmerdaten von mobilen Teilnehmern (A, B) eines Mobilfunknetzes (GSM) gebildet werden.

16. Verfahren nach einem der Ansprüche 1 bis 14, bei dem
die eigene Speichereinheit und die andere Speichereinheit jeweils von einer Dienstesteuerungseinheit (SCPa, CSE) zur Administrierung der Teilnehmerdaten von Teilnehmern (A, B) eines die Struktur eines Intelligenten Netzes (IN) unterstützenden Kommunikationsnetzes gebildet wird.

17. Verfahren nach Anspruch 16, bei dem
von der zuerst angesteuerten Dienstesteuerungseinheit (SCPa) eine weitere Speichereinheit (HLRb) aufgefordert wird, Routinginformationen (CSEA) zu übermitteln, die die andere Dienstesteuerungseinheit (SCPa), zu der zumindest die Informationen (FM, A#, B#) für die Ansteuerung der fremden Teilnehmerdaten zu senden sind, identifiziert.

18. Kommunikationsnetz (KN) zur Administrierung von Teilnehmerdaten von registrierten Teilnehmern (A, B), mit
- vernetzten Vermittlungseinrichtungen (VMSC/VLR, GMSCa, GMSCb), an die über weitere Einrichtungen (z.B. BS) den Zugang von Teilnehmern ermöglichende Kommunikationsendgeräte (MSa, Msb) anschließbar sind und/oder über die Übergänge zu mindestens einem weiteren Netz (PSTN) bewirkt werden können,
- einer Speichereinheit (HLRa), zum Registrieren der Teilnehmerdaten von Teilnehmern (A) und zum Bereitstellen der Teilnehmerdaten für eine Unterstützung von Kommunikationsverbindungen zu einem dieser Teilnehmer (A)
- zumindest einer weiteren Speichereinheit (HLRb), die derart ausgelegt ist, daß sie als zentrale Datenbasis die Teilnehmerdaten von weiteren mobilen Teilnehmern (B) registriert und zur Unterstützung von Kommunikationsverbindungen zu einem dieser Teilnehmer (B) die Teilnehmerdaten des Teilnehmers bereitstellt,
**dadurch gekennzeichnet,**
- **dass** vom Teilnehmer (A) über eine Teilnehmerselbsteingabe (SCI) an dem Kommunikationsendgerät (MSa) die eigene Speichereinheit (HLRa) zur Administrierung der Teilnehmerdaten ansteuerbar ist, und
- **dass** mit einer zwischen der eigenen Speichereinheit (HLRa) und einer anderen Speichereinheit (HLRb) jeweils eingerichteten Schnittstelle (HaHb-IF), über die Informationen (FM, B#) zur Ansteuerung von fremden Teilnehmerdaten übertragbar sind.

19. Kommunikationsnetz (KN) nach Anspruch 18 mit Mittel (HSE) in der eigenen Speichereinheit (HLRa) zum Senden von Informationen für eine Synchronisation der Teilnehmerdaten zu der anderen Speichereinheit (HLRb) über die Schnittstelle (HaHb-IF).

20. Kommunikationsnetz (KN) nach Anspruch 18 oder 19 mit
- Mittel (VMSC/VLR) zum Aussenden einer Information (FM) über einen Dienst für einen Teilnehmer (A) zu seiner eigenen Speichereinheit (HLRa), der vom Teilnehmer (A) durch die Teilnehmerselbsteingabe (SCI) angesteuert wird und der signalisiert, daß die einen anderen Teilnehmer betreffenden Kommunikationsverbindungen zu ihm weitergeleitet werden sollen,
- Mittel (HSE) in der eigenen Speichereinheit (HLRa) zum Feststellen, daß der andere Teilnehmer in einer fremden Speichereinheit (HLRb) registriert ist, und
- Mittel (HSS) in der fremden Speichereinheit (HLRb) zum Registrieren der über die Schnittstelle (HaHb-IF) empfangenen Information (FM) über den Dienst für den anderen Teilnehmer.

21. Kommunikationsnetz (KN) nach einem der Ansprüche 18 bis 20 mit
Heimatregistern (HLRa, HLRb) als Speichereinheiten für die Administrierung von mobilen Teilnehmern eines Mobilfunknetzes (GSM).

22. Kommunikationsnetz (KN) nach einem der Ansprüche 18 bis 20 mit
Dienstesteuerungseinheiten (SCPa, CSE) als Speichereinheiten zur Administrierung der Teilnehmerdaten von Teilnehmern (A, B) eines die Struktur eines Intelligenten Netzes (IN) unterstützenden Kommunikationsnetzes.

## Claims

1. Method for administering subscriber data for subscribers (A, B) of a communication network (KN),
- with networked local exchanges (VMSC/VLR, GMSCa, GMSCb), to which communication terminals (MSa, MSb) can be connected via further facilities (BS) to enable subscribers to be accessed and/or via which transitions to at least one other network (PSTN) can be implemented,
- with a storage unit (HLRa) which registers the subscriber data of subscribers as a central database and provides subscriber data of the subscriber to support communication links to one of these subscribers (A), and
- at least one further storage unit (HLRb) which registers the subscriber data of further subscriber as a central database and provides subscriber data of the subscriber to support communication links to one of these subscribers (B),
**characterized in that**
- the subscriber's own storage unit (HLRa) is accessed by the subscriber (A) via a service controlled input (SCI) at the communication terminal (MSa) for administering the subscriber data,
- between the subscriber's own storage unit (HLRa) and another storage unit (HLRb) an interface (HaHb-IF) is set up via which the information (FM, B#) for accessing foreign subscriber data is transferred.

2. Method in accordance with Claim 1 in which
the information (FM, B#) for accessing the foreign subscriber data is transferred in at least one container message (CON) between two storage units (HLRa, HLRb).

3. Method in accordance with Claim 1 or 2 in which
a message (REG) is received by the subscriber's own storage unit (HLRa) from which it detects the interface (HaHb-IF) via which the information (FM, B#) is to be transferred to the other storage unit (HLRb).

4. Method in accordance with Claim 3 in which
the received message (REG) is forwarded unchanged in a container message (CON).

5. Method in accordance with Claim 3 in which
the received message (REG) is changed or replaced by the subscriber's own storage unit (HLRa) and a modified or new message is transferred in a container message (CON).

6. Method in accordance with one of the aforementioned claims in which information for synchronizing the subscriber data is transferred from the subscriber's own storage unit (HLRa) to the other storage unit (HLRb) on the interface (HaHb-IF).

7. Method in accordance with Claim 6 in which
the service data of a service relating to multiple subscribers is administered in multiple storage units (HLRa, HLRb) and is synchronized by the information transferred on the relevant interfaces (HaHb-IF).

8. Method in accordance with one of the aforementioned claims in which access authorization (PW) for access by a storage unit (HLRa) to the foreign subscriber data of another storage unit (HLRb).

9. Method in accordance with one of the aforementioned claims for use for a call-related service in which an incoming call in the communication network (KN) intended for a group of subscribers is forwarded only to the subscribers who are available, which is determined by querying the subscriber data in the storage units (HLRa, HLRb) via the relevant interfaces (HaHb-IF).

10. Method in accordance with one of the aforementioned claims in which
- a service is accessed by the subscriber (e.g. A) through a service controlled input (SCI) and information (FM) relating to this is sent to the subscriber's own storage unit (HLRa) which indicates that the communication links relating to another subscriber are to be forwarded to him,
- the subscriber's own storage unit (HLRa) establishes that the other subscriber is registered in another storage unit (HLRb), and the information (FM) identifying the service is transferred via the interface (HaHb-IF) and registered in the other storage unit (HLRb) for the other subscriber.

11. Method in accordance with Claim 10 in which
the information (FM) on the service together with identification information (B#) for identifying the storage unit (HLRb) responsible for the other subscriber is sent by the communication terminal (MSa) to the communication network (KN).

12. Method in accordance with Claim 10 or 11 in which
the information (FM) identifying the service in the communication network (KN) is transferred together with identification information (B#) for identifying the storage unit (e.g. HLRb) responsible for the other subscriber and with identification information (A#) for identifying the storage unit (HLRa) responsible for the subscriber (A) activating the service controlled input (SCI).

13. Method in accordance with Claim 11 or 12 in which
the subscriber number (MSISDNb, MSISDNa) of the relevant subscriber is sent as identification information (B#, A#).

14. Method in accordance with on of the Claims 10 to 13 in which
a local exchange (GMSCb) in which a call arrives for the other subscriber sends a connection setup request message (SRI) to the relevant storage unit (HLRb) and as the response message (RSP) receives information (FM) on the registered service together with identification information (A#) for identifying the subscriber (A) to whom the call is to be forwarded.

15. Method in accordance with one of the aforementioned claims in which
the subscriber's own storage unit and the other storage unit are formed by a home register (HLRa, HLRb) for administering the subscriber data of mobile subscribers (A, B) of a mobile radio network (GSM).

16. Method in accordance with one of the Claims 1 to 14 in which the subscriber's own storage unit and the other storage unit are formed by a service control point (SCPa, CSE) for administering the subscriber data of subscribers (A, B) of a communication network supporting the structure of an intelligent network (IN).

17. Method in accordance with Claim 16 in which the first service control point (SCPa) to be accessed sends a request to a further storage unit (HLRb) to transfer routing information (CSEA) that identifies the other service control point (SCPa) to which at least the information (FM, A#, B#) for accessing the foreign subscriber data is to be sent.

18. Communication network (KN) for administering subscriber data of registered subscriber (A, B), with
- networked local exchanges (VMSC/VLR, GMSCa, GMSCb) to which communication terminals (MSa, MSb) can be connected via further facilities (e.g. BS) to enable subscribers to be accessed and/or via which transitions to at least one other network (PSTN) can be implemented,
- a storage unit (HLRa) for registering the subscriber data of subscribers (A) and for providing the subscriber data to support communication links to one of these subscribers (A)
- at least one further storage unit (HLRb) which is designed so that it registers the subscriber data of further mobile subscribers (B) as a central database and provides subscriber data of the subscriber to support communication links to one of these subscribers (B),
**characterized in that**
- the subscriber's own storage unit (HLRa) can be accessed by the subscriber (A) via a service controlled input (SCI) at the communication terminal (MSa) for administering the subscriber data, and
- with an interface (HaHb-IF) set up between the subscriber's own storage unit (HLRa) and another storage unit (HLRb) and via which the information (FM, B#) can be transferred for accessing foreign subscriber data.

19. Communication network (KN) in accordance with Claim 18 with facilities (HSE) in the subscriber's own storage unit (HLRa) for sending information for synchronizing the subscriber data to the other storage unit (HLRb) via the interface (HaHb-IF).

20. Communication network (KN) in accordance with Claim 18 or 19 with
- facilities (VMSC/VLR) for sending information (FM) on a service for a subscriber (A) to the subscriber's own storage unit (HLRa) which is accessed by the subscriber (A) by service controlled input (SCI) and which signals that the communication links relating to another subscriber are to be forwarded to him,
- facilities (HSE) in the subscriber's own storage unit (HLRa) for determining that the other subscriber is registered in a foreign storage unit (HLRb), and
- facilities (HSS) in the foreign storage unit (HLRb) for registering the information (FM) received via the interface (HaHb-IF) on the service for the other subscriber.

21. Communication network (KN) in accordance with one of the Claims 18 to 20 with home registers (HLRa, HLRb) as storage units for administering mobile subscribers of a mobile radio network (GSM).

22. Communication network (KN) in accordance with one of the Claims 18 to 20 with
service control point (SCPa, CSE) as storage units for administering the subscriber data of subscribers (A, B) of a communication network that supports the structure of an intelligent network (IN).

## Revendications

1. Procédé pour l'administration de données d'abonné pour des abonnés (A, B) d'un réseau de communication (KN),
- avec des appareils de commutation interconnectés (VMSC/VLR, GMSCa, GMSCb), auxquels des terminaux de communication (MSa, MSb) permettant l'accès d'abonnés peuvent être raccordés par d'autres appareils (BS) et/ou par lesquels des transferts à au moins un autre réseau (PSTN) peuvent être réalisés,
- avec une unité de stockage (HLRa), qui enregistre les données d'abonnés comme base centrale de données et fournit les données de l'abonné pour supporter des liaisons de communication avec l'un de ces abonnés (A), et
- au moins une autre unité de stockage (HLRb), qui enregistre les données d'autres abonnés comme base centrale de données et fournit les données de l'abonné pour supporter des liaisons de communication avec l'un de ces abonnés (B),
**caractérisé**
- **en ce que** l'unité de stockage (HLRa) propre pour l'administration des données d'abonné est commandée par l'abonné (A) au moyen d'une entrée commandée par l'abonné (SCl) sur le terminal de communication (MSa),
- **en ce que** entre l'unité de stockage (HLRa) propre et une autre unité de stockage (HLRb) est aménagée respectivement une interface (HaHb-IF) par laquelle des informations (FM, B#) sont transmises pour la commande de données d'abonné extérieures.

2. Procédé selon la revendication 1, avec lequel
les informations (FM, B#) pour la commande des données d'abonné extérieures sont transmises dans au moins une information en conteneur (CON) à chaque fois entre deux unités de stockage (HLRa, HLRb).

3. Procédé selon la revendication 1 ou 2, avec lequel
l'unité de stockage propre (HLRa) reçoit une information (REG) par laquelle elle identifie par quelle interface (HaHb-IF) les informations (FM, B#) doivent être transmises à l'autre unité de stockage (HLRb).

4. Procédé selon la revendication 3, avec lequel
l'information (REG) reçue est acheminée sans modification dans une information en conteneur (CON).

5. Procédé selon la revendication 3, avec lequel
l'information (REG) reçue est modifiée ou remplacée par l'unité de stockage (HLRa) propre et une information modifiée ou nouvelle est transmise dans un message en conteneur (CON).

6. Procédé selon l'une quelconque des revendications précédentes, avec lequel des informations pour la synchronisation des données d'abonné sont transmises de l'unité de stockage (HLRa) propre à l'autre unité de stockage (HLRb) sur l'interface (HaHb-IF).

7. Procédé selon la revendication 6, avec lequel les données de service d'un service concernant plusieurs abonnés sont administrées dans plusieurs unités de stockage (HLRa, HLRb) et sont synchronisées entre elles par les informations transmises sur les interfaces respectives (HaHb-IF).

8. Procédé selon l'une quelconque des revendications précédentes, avec lequel une autorisation d'accès (PW) pour l'accès d'une unité de stockage (HLRa) aux données d'abonné extérieures d'une autre unité de stockage (HLRb) est également envoyée.

9. Procédé selon l'une quelconque des revendications précédentes pour l'application pour un service spécifique à l'appel, avec lequel un appel arrivant dans le réseau de communication (KN) et adressé à un groupe d'abonnés n'est transmis qu'aux abonnés qui sont joignables, ce qui est déterminé par l'interrogation des données d'abonné dans les unités de stockage (HLRa, HLRb) par les interfaces respectives (HaHb-IF).

10. Procédé selon l'une quelconque des revendications précédentes, avec lequel
- un service est commandé par l'abonné (par exemple A) par l'entrée commandée par l'abonné (SCI) et une information (FM) à ce sujet est envoyée à sa propre unité de stockage (HLRa), qui signale que les liaisons de communication concernant un autre abonné doivent lui être transmises,
- l'unité de stockage (HLRa) propre constate que l'autre abonné est enregistré dans une autre unité de stockage (HLRb) et l'information (FM) caractérisant le service est transmise par l'interface (HaHb-IF) et est enregistrée dans l'autre unité de stockage (HLRb) pour l'autre abonné.

11. Procédé selon la revendication 10, avec lequel
le terminal de communication (MSa) envoie l'information (FM) sur le service en ensemble avec une information d'identification (B#) pour la caractérisation de l'unité de stockage (HLRb) valable pour l'autre abonné au réseau de communication (KN).

12. Procédé selon la revendication 10 ou 11, avec lequel
l'information (FM) caractérisant le service est transmise dans le réseau de communication (KN) ensemble avec une information d'identification (B#) pour la caractérisation de l'unité de stockage (par exemple HLRb) valable pour l'autre abonné et avec une information d'identification (A#) pour la caractérisation de l'unité de stockage (HLRa) valable pour l'abonné (A) effectuant l'entrée commandée par l'abonné (SCI).

13. Procédé selon la revendication 11 ou 12, avec lequel
le numéro d'appel d'abonné (MSISDNb, MSISDNa) de l'abonné concerné est envoyé comme information d'identification (B#, A#).

14. Procédé selon l'une quelconque des revendications 10 à 13, avec lequel un appareil de commutation (GMSCb), sur lequel arrive un appel destiné à l'autre abonné, envoie un message de demande d'établissement de communication (SRI) à l'unité de stockage (HLRb) valable et reçoit comme message de réponse (RSP) l'information (FM) sur le service enregistré ensemble avec une information d'identification (A#) pour la caractérisation de l'abonné (A), auquel l'appel doit être transmis.

15. Procédé selon l'une quelconque des revendications précédentes, avec lequel l'unité de stockage propre et l'autre unité de stockage sont formées respectivement par un registre de localisation nominal (HLRa, HLRb) pour l'administration des données d'abonnés mobiles (A,B) d'un réseau de téléphonie mobile (GSM).

16. Procédé selon l'une quelconque des revendications 1 à 14, avec lequel l'unité de stockage propre et l'autre unité de stockage sont formées respectivement par une unité de contrôle de service (SCPa, CSE) pour l'administration des données d'abonnés (A, B) d'un réseau de communication supportant la structure d'un réseau intelligent (IN).

17. Procédé selon la revendication 16, avec lequel
l'unité de contrôle de service (SCPa) commandée en premier lieu demande à une autre unité de stockage (HLRb) de transmettre des informations de routage (CSEA) que l'autre unité de contrôle de service (SCPa), à laquelle au moins les informations (FM, A#, B#) pour la commande des données d'abonné extérieures doivent être envoyées, identifie.

18. Réseau de communication (KN) pour l'administration de données d'abonnés (A, B) enregistrés, avec
- des appareils de commutation interconnectés (VMSC/VLR, GMSCa, GMSCb), auxquels des terminaux de communication (MSa, Msb) permettant l'accès d'abonnés par d'autres installations (par ex. BS) peuvent être raccordés et/ou par lesquels les passages à au moins un autre réseau (PSTN) peuvent être réalisés,
- une unité de stockage (HLRa), pour l'enregistrement des données d'abonné (A) et pour la mise à disposition des données d'abonné pour supporter des liaisons de communication avec l'un de ces abonnés (A)
- au moins une unité de stockage (HLRb) supplémentaire qui enregistre les données d'autres abonnés (B) mobiles comme base centrale de données et met à disposition les données de l'abonné pour supporter des liaisons de communication avec l'un de ces abonnés (B),
**caractérisé**
- **en ce que** l'abonné (A) peut commander au moyen d'une entrée commandée par l'abonné (SCI) sur le terminal de communication (MSa) la propre unité de stockage (HLRa) pour l'administration des données d'abonné et
- **en ce qu'**une interface (HaHb-IF) respectivement aménagée entre la propre unité de stockage (HLRa) et une autre unité de stockage (HLRb) peut transmettre les informations (FM, B#) pour la commande de données d'abonné extérieures.

19. Réseau de communication (KN) selon la revendication 18 avec
des moyens (HSE) dans l'unité de stockage propre (HLRa) pour l'envoi d'informations pour une synchronisation des données d'abonné à l'autre unité de stockage (HLRb) via l'interface (HaHb-IF).

20. Réseau de communication (KN) selon la revendication 18 ou 19 avec
- des moyens (VMSC/VLR) pour l'envoi d'une information (FM) sur un service pour un abonné (A) à sa propre unité de stockage (HLRa), qui est commandé par l'abonné (A) par l'entrée commandée par l'abonné (SCI) et qui signale que les liaisons de communication concernant un autre abonné doivent lui être transmises,
- des moyens (HSE) dans l'unité de stockage (HLRa) propre pour établir que l'autre abonné est enregistré dans une unité de stockage (HLRb) extérieure, et
- des moyens (HSS) dans l'unité de stockage (HLRb) extérieure pour l'enregistrement de l'information (FM) reçue par l'interface (HaHb-IF) sur le service pour l'autre abonné.

21. Réseau de communication (KN) selon l'une quelconque des revendications 18 à 20 avec
des registres de localisation nominaux (HLRa, HLRb) comme unités de stockage pour l'administration d'abonnés mobiles d'un réseau de téléphonie mobile (GSM).

22. Réseau de communication (KN) selon l'une quelconque des revendications 18 à 20 avec
des unités de contrôle de service (SCPa, CSE) comme unités de stockage pour l'administration des données d'abonné (A, B) d'un réseau de communication supportant la structure d'un réseau intelligent (IN).
